# EUROPEAN PATENT SPECIFICATION

(11) **EP 2 372 366 B1**
(45) Date of publication and mention of the grant of the patent: **03.07.2019**
(21) Application number: 10158303.7
(22) Date of filing: 30.03.2010
(51) Int. Cl.: G01N 35/00

(54) **Analysis station with incubation system**
Analysestation mit Inkubationssystem
Station d'analyse dotée d'un système d'incubation

(43) Date of publication of application: 05.10.2011
(73) Proprietor: Symbion Medical Systems Sàrl, 1580 Avenches (CH)
(72) Inventor: Yanez, Antonio, 1585 Salavaux (CH)
(74) Representative: P&TS SA (AG, Ltd.)

(56) References cited:
- EP-A2- 1 450 159
- WO-A1-01/04600
- GB-A- 1 018 285
- US-A- 4 066 407
- US-A- 4 244 694
- US-A- 5 869 347
- US-A1- 2003 231 878

## Description

### Field

The present disclosure is related to the field of chemical and biochemical reactions requiring temperature and/or incubation of the reaction mixture, such as agglutination assays involved in immunohematology. More particularly, the present disclosure concerns an incubation device and a method for use in an analysis station allowing for efficient heating and/or incubation of one or several reaction vessels comprising the reaction mixture.

### Background

Immunological agglutination reactions are used for identifying various kinds of blood types and for detecting various kinds of antibodies and antigens in blood samples and other aqueous solutions. In a conventional procedure, a sample of red blood cells is mixed with serum or plasma in test tubes or microplates, and the mixture may then be incubated and centrifuged. Various reactions either occur or do not occur depending on, for example, the blood type of the red blood cells or whether certain antibodies are present in the blood sample. Typically, these reactions manifest themselves as clumps of cells or particles with antigens or antibodies on their surfaces, referred to as agglutinates. Thus, the absence or presence of agglutinates indicates that no reaction or a reaction has occurred, respectively, with the size and amount of agglutinates being a quantitative indicator of the level or concentration in the sample, or an indicator of the reaction strength, affinity of the complex for which the blood sample was tested.

Recently, testing systems have been developed in which the agglutination reaction is carried out in one portion of a reaction vessel, and separation of agglutinated red cells is accomplished in another portion of the same reaction vessel using a matrix which separates agglutinated cells from other components in the reagent/sample mixture. Such reaction vessels, hereinafter called "index card", are in the form of several, usually six, columns formed in a transparent cassette with each column having an upper chamber and a lower chamber wherein the upper chamber is of a wider diameter than the lower chamber. The lower chamber contains a matrix for separating agglutinated cells from non-agglutinated cells. The diameter of the lower chamber is narrow enough such that when reagents and samples are added to the upper chamber, typically using a pipette, the reagents and samples remain in the upper chamber, and do not enter into the lower chamber, unless an additional force is applied.

In this method, gel or glass bead microparticles are contained within the lower chamber. A reagent is dispensed in a diluent in the lower chamber, and test red blood cells are placed in the reaction upper chamber. The reaction vessel is then centrifuged. The centrifuging accelerates the reaction, if any, between the reagent and the blood cells, and also urges any cells toward the bottom of the columns. The glass beads or gel in the lower chamber act as a filter, however, and resist or impede downward movement of the particles in the column. As a result, the nature and distribution of the particles in the lower chamber after centrifuging provides a visual indication of whether any agglutination reaction occurred in the lower chamber, and if so, of the strength of that reaction.

In typical immunohematology testing, reactants and/or samples have to be incubated at predetermined temperatures, varying typically between 4°C and 37°C. For example, most antibodies with clinical relevance are IgG immunoglobulins, which optimally react at temperatures of 37°C. In contrast, IgM antibodies are more reactive at lower temperatures, generally at or below room temperature. Providing the suitable incubation temperature in the reaction enhances the sensitization step.

In conventional analysis systems, all the reaction vessels of the index card are typically conditioned to a single predetermined incubation temperature. Consequently, one rotating support, or index card, can only be used for a single type of immunological agglutination assay or, at least, can only contain reactants and/or samples requiring the same sequence of predetermined incubation temperatures. For example, a test involving IgG immunoglobulins and another test involving IgM antibodies need to be performed sequentially using a different index card or rotating support, resulting in an increased analysis cycle time.

US2003231878 discloses an apparatus and methods for heating and sensing the temperature of a chemical reaction chamber without direct physical contact between a heating device and the reaction chamber, or between a temperature sensor and the reaction chamber. A plurality of chemical reaction chambers can simultaneously or sequentially be heated independently and monitored separately.

In US4244694, a reactor/separator device is provided for use in automated solid phase immunoassay. The device is a column, fitted at the bottom portion thereof with a water impermeable disc which can hold immunoabsorbents immobilized antisera, ion exchange resins and the like.

### Summary

The present disclosure concerns an analysis station which overcomes at least some limitations of the prior art.

According to the embodiments, the analysis station can comprises an analysis station for conducting agglutination assays, according to claim 1.

In an embodiment, said heating elements comprise one first heating element adapted for selectively heating a subset of one reaction vessel, one second heating element adapted for heating a subset of up to two reaction vessel, and one or more of a third heating element adapted for heating one or more subsets of up to three reaction vessels.

In another embodiment, said heating elements comprise five of said third heating element.

In yet another embodiment, the heating device is concentric with the rotating support.

In yet another embodiment, the first heating element extend along an arc length intercepting an angle of about 20°, the second heating element extend along an arc length intercepting an angle of about 40°, and each of said one or more of a third heating element extends along an arc length intercepting an angle of about 60°.

The present disclosure also pertains to a method according to claim 12.

The analysis station disclosed herein allows for performing agglutination reaction and separation assays using more than one incubation temperature. Assays can then be performed for different reagents and samples requiring different incubation temperature in a single rotating support and test procedure. Moreover, the analysis station allows for performing a complete assay using a single analysis station. This result in an increased analysis cycle time and more flexibility in assay planning.

### Brief description of the drawings

The invention will be better understood with the aid of the description of an embodiment given by way of example and illustrated by the figures, in which:
Fig. 1 represents a rotating support for conducting an agglutination assay comprising a set of twelve reaction vessels, according to an embodiment;
Fig. 2 shows a detailed view of one of the reaction vessels according to an embodiment;
Fig. 3 illustrates a cross section view of an analysis station according to an embodiment; and
Fig. 4 illustrates the analysis station viewed from top, according to an embodiment.

### Detailed description of the preferred embodiments

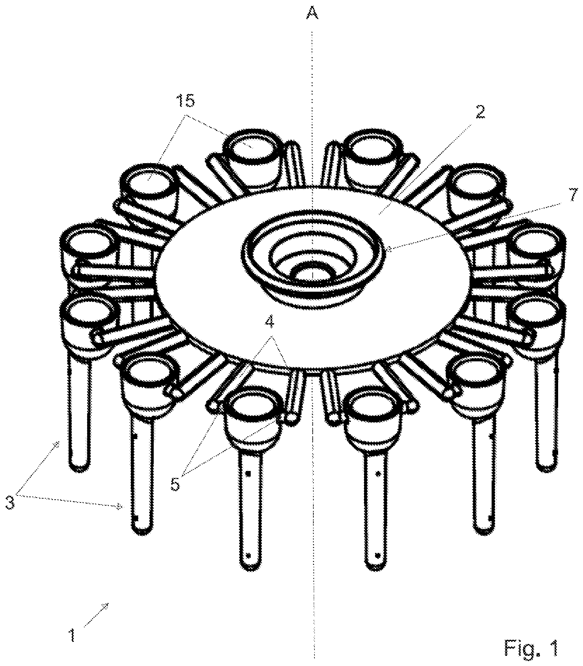

A rotating support 1 for conducting an agglutination assay according to an embodiment is represented in Fig. 1. The rotating support 1 comprises a disk-shaped support 2 with a rotation axis A, pivotally holding a set of twelve reaction vessels 3 around its periphery. In the example of Fig. 1, the reaction vessels 3 are pivotally held via a pair of holding arms 4, extending axially from the rotating support periphery. In this example, each arm 4 comprises a pin 5 at its outer extremity, extending essentially perpendicular to the radial direction of the rotating support 2, the pin 5 being fitted into a corresponding hole 6 in the reaction vessel 3. Other fixing means of the reaction vessels on the support 2 are however possible as long as the reactions vessels can pivot when the rotating support 1 is rotated. The rotating support 1 comprising twelve reaction vessels 3 allows for performing more tests than the conventional index card with six columns. However, rotating support 1 can comprise any number of reaction vessels 3. For example the rotating support 1 comprising a set of six or a set of eighteen reaction vessels 3 are other advantageous arrangements. A detailed description of the rotating support 1 disclosed here can be found in pending unpublished patent application PCT/EP2008/068260, the subject matter of which is fully incorporated by reference herein.

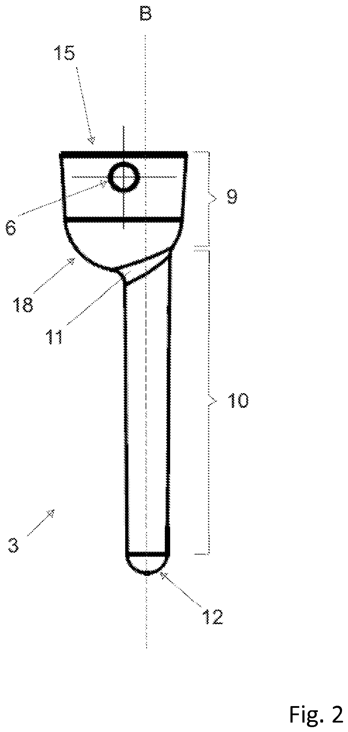

Fig. 2 shows a detailed view of one of the reaction vessels 3 according to an embodiment. Each reaction vessel 3 of the set of reaction vessels 3 comprises an upper chamber 9 and a lower chamber 10, wherein the upper chamber 9 is of a wider diameter than the lower chamber 10, producing a shoulder area 18 between the upper and lower chamber 9, 10. The upper chamber 9 has an opening 15 for accepting fluid reactants and/or sample. The lower chamber 10 is typically an elongate tube, somewhat longer in proportion to its width, and aligned along a longitudinal axis B that is sensibly parallel with axis A when the support 2 is not rotated. The lower chamber 10 has a closed end 12, opposite to an open end 11, in communication with the upper chamber 9 and permitting the fluids to flow from the upper chamber 9 to the lower chamber 10 when a force such as centrifugal force is applied. In the example of Fig. 2, the lower chamber 10 has essentially a cylindrical section, but other shapes are also possible. For example, the lower chamber 10 can have a conical section or have a first portion with conical section and another portion with a cylindrical section. Alternatively, the lower chamber 10 may have an elliptical section with substantially parallel sides.

In the case of agglutination assays, the lower chamber 10 generally contains a matrix for separating agglutinates from non-agglutinates in the reaction mixture. Such a matrix may be comprised of any suitable material for separating agglutinates such as glass beads, polymer beads, filter paper, gel filtration media, sintered glass, plastics, such as described in patent EP0305337. The wider upper chamber diameter facilitates the adding of the reagents and sample. The diameter of the lower chamber 10 is narrow enough such that when reagents and sample are added to the upper chamber 9, typically using a pipette assembly (not shown), the fluids remain in the upper chamber 9, and do not enter into the lower chamber 10, preventing their passage through the matrix, unless an additional force (such as centrifugation) is applied to effect their movement. It is therefore possible to exert control over the timing of the agglutination assay.

In the preferred embodiment shown in Fig. 2, the upper chamber 9 is eccentric with the lower chamber 10. In this configuration, the reagents and sample can be pipetted in the shoulder area 18, also eccentric with the lower chamber 10, allowing the fluids to be retained in the upper chamber 9 for a certain period of time before they are introduced into the separation matrix of the lower chamber 10. This conformation reduces the risk of having fluids pipetted directly to the top of the separation matrix in the lower chamber 10 and not retained in the upper chamber 10 during the incubation phase.

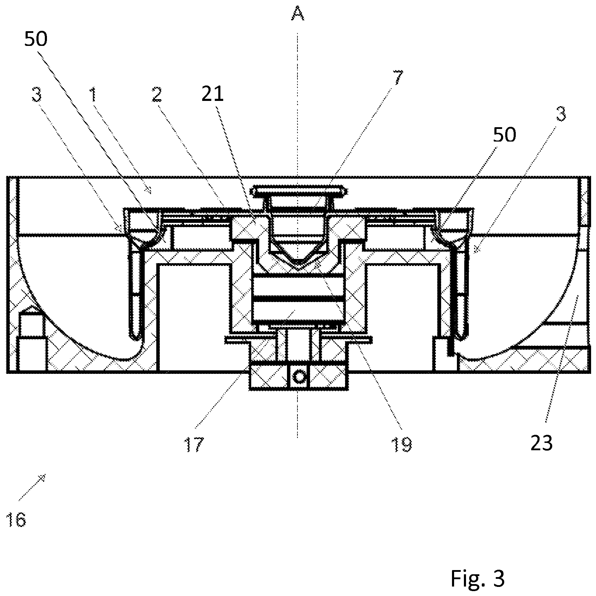

In the example of Fig. 2, the rotating support 1 further comprises a cup-shaped receptacle 7 within the disk-shaped support 2 and concentric with the rotation axis A. In the example of Fig. 3, the receptacle 7 extends below and above the plane of the rotating support 2, but could also be placed otherwise, such as completely below or above the plane of the rotating support 2. The receptacle 7 is destined to receive fluids preparations containing, for example, reactants, diluents and/or test sample such as red blood cells, plasma, etc. The receptacle 7 can also comprise cover 8 provided with an opening 20 in order to retain the reactants and sample within the receptacle 7 when the rotating support 1 is centrifuged. Other arrangements of the rotating support 1 are also possible. For example, the rotating support 1 can comprise no receptacle 7. Alternatively, the rotating support 1 can comprise several small receptacles angularly distributed between the center of the support 1 and its periphery.

Fig. 3 illustrates a cross section view of an analysis station 16 according to an embodiment, viewed through a line perpendicular to rotation axis A. The analysis station 16 comprises centrifugation device containing a drive shaft 17 adapted to drivingly hold the rotating support 1. In the example of Fig. 3, the drive shaft 17 comprises a drive end 21 fixed coaxially on the drive shaft 17 and containing a recess 19 in which the receptacle 7 of the rotating support 1 can be fixedly fitted. The analysis station 16 can comprise a transport means (not represented) adapted to pick-up and fix the rotating support 1 on the drive shaft 17. When fixed, the rotation axis A of the rotating support 1 is substantially coaxial with the rotation axis of the drive shaft 17. In the example of Fig. 3, the analysis station 16 further comprises a cup-shaped housing 23 enclosing the drive shaft 17 and the rotating support 1.

In an embodiment, the external surface of the receptacle 7 in contact with the recess 19 comprises one or several ribs (not shown) cooperating with one or several corresponding grooves (also not shown) on the surface of the recess 19. The use of ribs and grooves allows avoiding possible unwanted radial displacements of the rotating support 1 in respect to the drive shaft 17, especially during rotation of the drive shaft 17 during centrifugation. The drive shaft 17 is rotated by a motor (not shown) controlled by a drive controller (also not represented) such as to rotate the rotating support 1 to a predetermined rotation speed.

Other arrangements for drivingly hold the rotating support 1 on the drive shaft 17 are however possible. For example, the rotating support 1 can be screwed to the drive shaft 17, directly or via the drive end 21. This latter holding arrangement can be advantageously used in the case the rotating support 1 does not comprises the receptacle 7.

The analysis station 16 further comprises a stationary heating device, shown by the numeral 50 in Fig. 3, adapted to heat the reactants and sample within subsets of the set of reaction vessels 3 at predetermined incubation temperatures, when the rotating support 1 is held on the drive shaft 17. In the example of Fig. 3, the annular-shaped heating device 50 is disposed concentric with the rotation axis A, beneath the disk-shaped support 2. The outer diameter of the heating device 50 is small enough not to interfere with the surrounding set of reaction vessels 3, allowing the rotation vessels to pivot when the rotating support 1 is rotated.

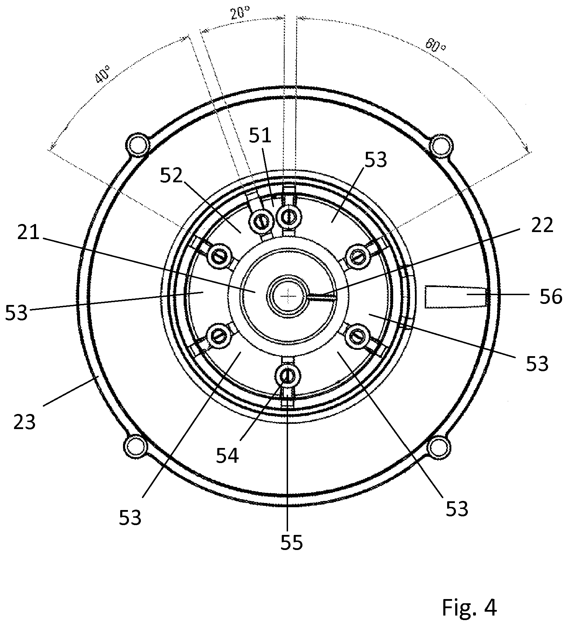

Fig. 4 illustrates the analysis station 16 viewed from top. In the figure, rotating support 1 and the reaction vessels 3 are not shown. In the exemplary embodiment of Fig.4, The heating device 50 comprises one first heating element 51 extending along an arc length intercepting an angle of about 20°, one second heating element 52 extending along an arc length intercepting an angle of about 40°, and five of a third heating element 53, each third heating element 53 extending along an arc length intercepting an angle of about 60°. The heating elements 51, 52, 53 are thermally separated from each other by an insulating separator 55 and are controlled separately in temperature. The insulating separator 55 can be made from any non-heat conducting materials such as plastics or ceramics. Alternatively, the insulating separator 55 can be an air gap.

In the configuration of Fig. 4, the stationary heating device 50 can selectively heat subsets comprising one or more reaction vessels 3. For example, in the case the rotating support 1 comprises twelve reaction vessels 3, the latter can be held on the drive shaft 17 and be angularly positioned such that one of the reaction vessels 3 is aligned with the first heating element 51, another reaction vessel 3 is aligned with the second heating element 52, and the remaining reaction vessels 2 are aligned by pair of adjacent reaction vessels 2 with the five third heating elements 53. In this configuration, a subset comprising one or two reaction vessels 3 can be selectively heated by the first and/or second heating elements 51, 52, respectively. A subset comprising three and more reaction vessels 3 can be selectively heated by using, in combination, the first and/or second heating elements 51, 52 with one or more of the third heating elements 53.

In a variant of the embodiment (not represented), the first and second heating elements 51, 52 can be formed form a single element, for example by adding the insulating separator 55 to an element similar to one of the third heating elements 53, in a position such as to form two portions having an arc length corresponding to the ones of the first and second elements 51, 52, respectively.

The heating elements 51, 52, 53 being controlled independently in temperature, the predetermined incubation temperature can be different for the different subsets of reaction vessels 3. It is therefore possible to fill the different subsets of reaction vessels 3 with different type of reagents or samples that require different incubation temperatures. It is also possible to heat only some of the possible subsets for incubation, while keeping the other subsets at room temperature.

The heating device 51, 52, 53 shown in Fig. 4 is also suitable for the rotating support 1 comprising a set with a number of reaction vessels 3 different than twelve. In an exemplary embodiment where the rotating support 1 comprises a set of six reaction vessels 3, the rotating support 1 can be positioned such that each of the six subsets comprising one reaction vessel 3 are aligned with each third heating element 53 and with the first or second heating element 51, 52, respectively.

Alternatively, the rotating support 1 comprising a set of eighteen reaction vessels 3 can be positioned such that a subset of one reaction vessel 3 is aligned with the first heating element 51, a subset of two reaction vessels 3 is aligned with the second heating element 52, and each of the remaining five subsets of three reaction vessels 3 is aligned with one of the five third heating elements 53. The set of eighteen reaction vessels 3 can be advantageously used for performing numerous simultaneous tests.

In a preferred embodiment, the heating device 50, 51, 52, 53 is disposed at an elevation corresponding to the upper chambers 9 of the set of reaction vessels 3 when the rotating support 1 is held on the drive shaft 17, as shown in Fig. 3. Also visible in Fig. 3, the outer side of the heating device 50 can be shaped such as to be substantially conformal with the shape of the upper chamber 9. Preferably, the distance between the outer surface of the heating device 50 and the upper chambers 9 is inferior to 1 mm. In this configuration, optimal heat transfer can be achieved between the heating elements 51, 52, 53 of the heating device 50 and the reaction vessels 3. Consequently, the difference between the temperature set on the heating elements 51, 52, 53 and the resulting predetermined incubation temperature of the mixed reactants and sample within the heated upper chambers 9 of the reaction vessels 3 can be minimized. This configuration also improves the heating selectivity between the different subsets of reaction vessels 3 that are heated at different temperatures by the different heating elements 51, 52, 53.

In an embodiment, a method for performing an agglutination reaction and separation assay by using the analysis station 16 disclosed herein comprises the steps of:
providing the rotating support 1 comprising the set of reaction vessels 3 fixedly held on the drive shaft 17 wherein the reaction vessels 3 contain a separation matrix within their lower chamber 10;
pipetting reagents and samples into the upper chamber 9 of at least one reaction vessel 3 of the set of reaction vessels 3;
incubating the reagents and samples at predetermined incubation temperatures by heating at least one heating element 51, 52, 53; and
centrifuging the rotating support 1 at a predetermined centrifugation speed and time to force the reacted reactants and sample from the upper chamber 9 to the lower chamber 10.

The incubation is performed at a predetermined incubation temperature and period of time sufficient to allow for forming agglutinates. For example, the incubation can be performed during 7 to 10 minutes at a temperature comprised between room temperature and 37°C, depending on the reactants and/or sample used, as described above. The size and amount of agglutinates are a quantitative indicator of the level or concentration in the sample, or an indicator of the reaction strength. The absence of agglutinate indicates that no reaction has occurred.

In an embodiment, the heating elements 51, 52, 53 are controlled separately in temperature by a temperature controller (not shown) adapted to selectively set a possibly different predetermined temperature level on each of the heating elements 51, 52, 53. For example, the predetermined temperature levels can be selected such as to achieve heating of the reactants and/or sample within the upper chambers 9 at the desired predetermined incubation temperatures. The temperature controller can also be adapted to hold the predetermined temperature level for varying lengths of time or altering them at different rates of change.

In an embodiment, the analysis station 16 further comprises a control unit (not represented) connected to the temperature controller in order to automatically control the predetermined temperature levels on the different heating elements 51, 52, 53. The analysis station 16 can further comprise a temperature sensor device (not shown) for measuring the temperature of the heating elements 51, 52, 53 or of the reaction vessels 3, preferably of the upper chambers 9. In the latter case, the temperature sensor device can be a contactless temperature sensor such as an infrared radiation thermometer. The temperature sensor device can be adapted to provide a signal to the temperature controller in order, for example, to adjust the predetermined temperature levels if needed.

Prior to incubating, the set of reaction vessels 3 can be angularly positioned with respect to the heating elements 51, 52, 53 allowing for selectively heat subsets comprising one or more reaction vessels 3 at predetermined incubation temperatures. For example, in the case of the set of eighteen reaction vessels 3, the subset comprising one reaction vessel 3 can be selectively heated by the first heating element 51, the subset comprising two reaction vessels 3 can be selectively heated by the second heating element 52, and the five subsets comprising three reaction vessels 3 can be selectively heated by the third heating elements 53. The heating elements 51, 52, 53 being controlled independently in temperature, the predetermined incubation temperature can be different for the different subsets. It is then possible to draw different reagents and samples requiring different incubation temperatures in the reaction vessels 3 of the different subsets. It is also possible to use only some subsets for performing the assay tests where only these subsets are incubated.

Positioning of the set of reaction vessels 3 can be performed manually. To this end, the rotating support 1 can comprise at least one positional reference (not shown). When fitting the rotating support 1 on the drive shaft 17, the positional reference can be aligned with one or more corresponding reference marks (also not shown), for example located on the housing 23. Alternatively, the positional reference can be a protruding or recessed structure possibly engaging with a corresponding counter-structure (see numeral 22 in Fig. 4), for example, provided on the drive end 21.

In an embodiment, the analysis station 16 further comprises a control unit (not represented) connected to the drive controller to operate the drive shaft 17 such as to position the rotating support 1 automatically. In this configuration, the analysis station 16 can further comprises a position sensor (not represented) adapted for measuring the angular position of the rotating support 1 in order to ensure accurate positioning of the set of reaction vessels 3 with respect to the respective heating elements 51, 52, 53.

Prior to pipetting reagents and samples into the upper chamber 9, the reagents and samples can be pipetted and mixed together into the receptacle 7, for example, through the cover opening 20. The mixed reagents and samples are then pipetted in the shoulder area 18 the reaction vessels 3.

In an embodiment, the control unit is connected to the pipette assembly and to the transport means. The control unit operates the pipette assembly to automatically draw the reagents and sample into the receptacle 7 and into the upper chamber 9. Also, the control unit operates the transport assembly to carry the rotating support 1 on the drive shaft 17 in an automated fashion. The different reagents and samples can be pipetted in different subsets of reaction vessels 3 according to their position relative to the heating elements 51, 52, 53, thus to their predetermined incubation temperatures.

The centrifuging speed and time, controlled by the drive controller, should be suitable to allow the agglutinates, if any, to form a cluster or band in the matrix column. Unagglutinated materials migrate down through the separation matrix while agglutinates remain on top of the separation matrix, or are distributed at various distances from the top of the matrix, depending on the degree of agglutination. The centrifuging speed and time can be controlled by the control unit in the case the latter is connected to the drive controller.

In an embodiment, the analysis system 16 further comprises reading and interpretation means, schematically represented by the numeral 56 in Fig. 4, designed to optically or otherwise detect cluster agglutinate and/or band or button formation within a certain area of the agglutination reaction zone in the lower chamber 10. Alternatively, observation can be performed manually.

In a preferred embodiment, there is provided a computer program product configured to be operable on the control unit or any other external processing unit (not represented) controlling the control unit, and adapted to control at least one of the pipette assembly, the transport means, the drive controller and the temperature controller.

The computer program product is configured to carry out at least one of the steps of carry the rotating support 1 on the drive shaft 17, operate the pipette assembly, position the rotating support 1, control the predetermined incubation temperature and incubation time for the heating elements 51, 52, 53, and/or control the centrifuging speed and time of the rotating support 1, when the program is executed by the control unit or the any other external processing unit.

In another embodiment, the rotating support 1 can further comprise an identification means (not represented) such as a bar code or a read/write RFID tag attached thereto which contains coded information relating to the reactants and sample contained within the reaction vessels 3, such as the reactant types and their concentration, and to the tests to be performed. The analysis station 16 can also include a reader adapted to read the information contained in the identification means. The identification means can further comprises information for operating the temperature controller, or control unit, in order to set adequate heating temperatures to the heating elements 51, 52, 53 in accordance with the position of the set of reaction vessels 3. The information can further be used for operating the drive controller, or control unit, in order to position the reaction vessels 3 with respect to the heating elements 51, 52, 53. The information comprised in the identification means can be inputted in the computer program product in order to controlling the control unit, or the any other external processing unit, accordingly.

The disclosure is susceptible to various modifications and alternative forms, and specific examples thereof have been shown by way of example in the drawings and are herein described in detail. It should be understood, however, that the disclosure is not to be limited to the particular forms or methods disclosed, but to the contrary, the disclosure is to cover all modifications, equivalents, and alternatives as defined by the appended claims.

For example, other arrangements of the heating device 50 are possible, such as the heating device 50 comprising more or less than five of the third heating element 53. In an embodiment not represented, the heating device 50 comprises seven of the third heating element 53. Such heating device 50 is adapted, for example, for using the rotating support 1 having a set comprising up to twenty four reaction vessels 3. Alternatively, the heating device 50 can comprise one first heating element 51 and a plurality of the second heating element 52, or only a plurality of first heating elements 51. The latter configuration allows for selectively heat a set of reaction vessels 3 in any possible combinations of subsets of one reaction vessel 3.

The heating device 50 may not necessarily be annular-shaped with arc-shaped heating elements 51, 52, 53. For example, in another embodiment not represented, the heating device 50 comprises several spatially separated heating elements arranged, for example, in a hexagonal pattern within the inner diameter bounded by the set of reaction vessels 3. The heating elements can be rectangular, hexagonal or cylindrical shaped and are controlled separately in temperature by the temperature controller. What is important here, is that the different heating element be able to heat one or more subsets of reaction vessels 3 depending on the alignment of each subset with the different heating elements. Alternatively, the heating elements can extend along the whole length of the reaction vessels 3 in order to be able to heat the upper and lower chambers 9, 10 substantially uniformly.

In another embodiment, the heating device 50 has the form of an annular stripe concentric with the rotation axis A, and is placed on top of the rotating support 1, for example, on top of the upper chambers 9 of the reaction vessels 3. The different heating elements 51, 52, 53 can be formed, for example, by sectioning the annular stripe in segments having the appropriate arc length and arranged such that the upper chambers 9 are accessible for pipetting during the pipetting steps and are located above the upper chambers 9 during the incubating step. Such a configuration can be achieved, for example, by providing at least an empty section in the annular stripe and changing the angular position of the rotating support 1 between the pipetting and the incubating steps.

### Reference numbers and symbols

- 1: rotating support
- 2: disk-shaped support
- 3: reaction vessel
- 4: holding arms
- 5: pin
- 6: hole
- 7: receptacle
- 8: cover
- 9: upper chamber
- 10: lower chamber
- 11: open end
- 12: closed end
- 15: opening
- 16: analysis station
- 17: drive shaft
- 18: shoulder area
- 19: recess
- 20: opening of the cover
- 21: drive end
- 22: counter-structure
- 23: housing
- 50: heating device
- 51: first heating element
- 52: second heating element
- 53: third heating element
- 54: screw
- 55: insulating separator
- 56: reading and interpretation means

## Claims

1. An analysis station (16) for conducting agglutination assays, comprising:
a rotating support (1), concentric with a rotation axis (A) and being adapted to pivotally hold a set of reaction vessels (3), each reaction vessel (3) of said set of reaction vessels (3) comprising an upper chamber (9) configured for receiving fluid reactants and/or sample, and a lower chamber (10);
a drive shaft (17) arranged to drivingly hold said rotating support (1) coaxially and rotate it at a predetermined rotation speed such that the reactants and/or sample can flow from the upper chamber (9) to the lower chamber (10) when the rotating support (1) is rotated at a centrifugation rotation speed; and
a stationary heating device (50) for heating the set of reaction vessels (3);
said heating device (50) comprising a plurality of heating elements (51, 52, 53) being thermally separated from each other and controlled separately in temperature, the heating elements (51, 52, 53) being arranged such as to selectively heat subsets of said set of reaction vessels (3) at predetermined incubation temperatures, when the rotating support (1) is held on the drive shaft (17);
the heating device (50) is arranged concentric with the rotation axis (A) and having an outer diameter small enough such as to allow the reaction vessels (3) to pivot when the rotating support (1) is rotated; and
said heating device (50) is at an elevation corresponding to said upper chamber (9).

2. The analysis station (16) according to claim 1, wherein
said heating elements (51, 52, 53) comprise one first heating element (51) adapted for selectively heating a subset of up to one reaction vessel (3), one second heating element (52) adapted for heating a subset of up to two reaction vessel (3), and one or more of a third heating element (53) adapted for heating one or more subsets of up to three reaction vessels (3).

3. The analysis station (16) according to claim 2, wherein
said heating elements (51, 52, 53) comprise five of said third heating element (53).

4. The analysis station (16) according to any of the claims from 1 to 3, wherein
the heating device (50) is concentric with the rotating support (1).

5. The analysis station (16) according to any of the claims from 1 to 4, wherein
said heating elements (51, 52, 53) are thermally separated from each other by an insulating separator (55).

6. The analysis station (16) according to claim 5, wherein
the insulating separator (55) is an air gap.

7. The analysis station (16) according to any of the claims from 1 to 6, wherein
the first heating element (51) extends along an arc length intercepting an angle of about 20°, the second heating element (52) extends along an arc length intercepting an angle of about 40°, and each of said one or more of a third heating element (53) extends along an arc length intercepting an angle of about 60°.

8. The analysis station (16) according to any of the claims from 1 to 7, wherein
the rotating support (1) comprises at least one positional reference being adapted for aligning said set of reaction vessels (3) with respect to said heating elements (51, 52, 53).

9. The analysis station (16) according to any of the claims from 1 to 8,
further comprising a control unit adapted to operate the drive shaft (17) for positioning the rotating support (1) and/or to operate said heating elements (51, 52, 53) for setting their respective predetermined temperature levels.

10. The analysis station (16) according to any of the claims from 1 to 9,
further comprising a position sensor adapted for measuring an angular position of the rotating support (1).

11. The analysis station (16) according to any of the claims from 1 to 10, wherein
the rotating support 1 further comprises an identification means containing coded information, and a reader adapted to read the information contained in the identification means.

12. Method for performing an agglutination assay using the analysis station (16) according to any of the claims from 1 to 11;
comprising:
providing the rotating support (1) fixedly held on the drive shaft (17) wherein the reaction vessels (3) of said set of reaction vessels (3) contain a separation matrix within their lower chamber (10);
pipetting reagents and sample into the upper chamber (9) of at least one reaction vessel 3 of the set of reaction vessels 3;
incubating the reagents and sample at predetermined incubation temperatures by heating at least one heating element (51, 52, 53); and
centrifuging the rotating support (1) at a predetermined centrifugation speed to force the incubated reactants and sample from the upper chamber (9) to the lower chamber (10);
prior to said incubating, the method further comprises angularly positioning said subsets of reaction vessels (3) with respect to the heating elements (51, 52, 53); and
said incubating comprises selectively incubating the reagents and sample into the upper chamber (9) by heating the subsets at predetermined incubation temperatures according to said positioning.

13. The method according to claim 12, wherein
said pipetting is performed by pipetting different reagents and samples in different selected subsets of reaction vessels (3) according to said positioning.

14. The method according to the claims 12 or 13, wherein
said incubating is performed at predetermined incubating temperatures comprised between room temperature and 37°C.

15. The method according to any of the claims from 12 to 14, wherein
different selected subsets of reaction vessels (3) are incubated at different predetermined incubating temperatures according to said positioning.

16. The method according to any of the claims from 12 to 15, wherein
the rotating support 1 further comprises identification means containing coded information and wherein
said positioning and/or said incubating are performed in accordance with coded information comprised in the identification means.

17. Computer carrier comprising program code portions to be executed by a control unit in order to carry out the method according to any of the claims from 12 to 16 when said program is executed by said control unit.

## Patentansprüche

1. Analysestation (16) zum Durchführen von Agglutinationstests, umfassend:
einen drehbaren Träger (1), konzentrisch zu einer Drehachse (A) und angepasst, um einen Satz von Reaktionsgefässen (3) schwenkbar zu halten; wobei jedes Reaktionsgefäss (3) des besagten Satzes von Reaktionsgefässen (3) eine für den Empfang von Flüssigreagenzmitteln und/oder Proben konfigurierte obere Kammer (9) und eine untere Kammer (10) umfasst,
eine Antriebswelle (17), die angeordnet ist, um den besagten drehbaren Träger (1) antreibend koaxial zu halten und ihn mit einer vorbestimmten Drehgeschwindigkeit zu drehen, so dass die Reagenzmittel und/oder Probe von der oberen Kammer (9) zur unteren Kammer (10) fliessen können, wenn der drehbare Träger (1) bei einer Schleuderdrehgeschwindigkeit gedreht wird; und
eine stationäre Heizvorrichtung (50) zum Erwärmen des Satzes von Reaktionsgefässen (3);
wobei die besagte Heizvorrichtung (50) eine Mehrzahl von Heizelementen (51, 52, 53) umfasst, welche thermisch voneinander getrennt sind und in der Temperatur getrennt gesteuert werden, wobei die Heizelemente (51, 52, 53) angeordnet sind, um selektiv Untergruppen des besagten Satzes von Reaktionsgefässen (3) bei vorbestimmten Inkubationstemperaturen zu heizen, wenn der drehbare Träger (1) auf der Antriebswelle (17) gehalten wird;
wobei die Heizvorrichtung (50) konzentrisch mit der Drehachse (A) angeordnet ist und einen Aussendurchmesser aufweist, der genügend klein ist, um das Drehen der Reaktionsgefässe (3) zu ermöglichen, wenn der drehbare Träger (1) gedreht wird; und
wobei die besagte Heizvorrichtung (50) sich in einer Höhe befindet, welche derjenigen der besagten oberen Kammer (9) entspricht.

2. Analysestation (16) gemäss Anspruch 1, worin die besagten Heizelemente (51, 52, 53) umfassen: ein erstes Heizelement (51), angepasst zum selektiven Erwärmen einer Untergruppe von bis zu einem Reaktionsgefäss (3), ein zweites Heizelement (52), angepasst zum Beheizen einer Untergruppe von bis zu zwei Reaktionsgefässen (3), und eines oder mehrerer dritter Heizelemente (53), angepasst zum Erwärmen von einer oder mehreren Untergruppen von bis zu drei Reaktionsgefässen (3).

3. Analysestation (16) gemäss Anspruch 2, worin die besagten Heizelemente (51, 52, 53) fünf des besagten dritten Heizelements (53) umfassen.

4. Analysestation (16) gemäss irgendeinem der Ansprüche 1 bis 3, worin die Heizvorrichtung (50) mit dem drehbaren Träger (1) konzentrisch ist.

5. Analysestation (16) gemäss irgendeinem der Ansprüche 1 bis 4, worin die besagten Heizelemente (51, 52, 53) thermisch voneinander durch einen isolierenden Separator (55) getrennt sind.

6. Analysestation (16) gemäss Anspruch 5, worin der isolierende Separator (55) ein Luftspalt ist.

7. Analysestation (16) gemäss irgendeinem der Ansprüche 1 bis 6, worin sich das erste Heizelement (51) entlang einer Bogenlänge erstreckt, die einen Winkel von etwa 20° schneidet, worin sich das zweite Heizelement (52) entlang einer Bogenlänge erstreckt, die einen Winkel von etwa 40° schneidet, und worin jedes von dem besagten einen oder den besagten mehreren eines dritten Heizelements (53) sich entlang einer Bogenlänge erstreckt, die einen Winkel von etwa 60 ° schneidet.

8. Analysestation (16) gemäss irgendeinem der Ansprüche 1 bis 7, worin der drehbare Träger (1) mindestens eine Positionsreferenz aufweist, welche zum Ausrichten des besagten Satzes von Reaktionsgefässen (3) in Bezug auf die besagten Heizelemente (51, 52, 53) angepasst ist.

9. Analysestation (16) gemäss irgendeinem der Ansprüche 1 bis 8, ferner umfassend eine Steuereinheit, welche angepasst ist, um die Antriebswelle (17) zum Positionieren des drehbaren Trägers (1) zu betreiben, und/oder um die besagten Heizelemente (51, 52, 53) zum Einstellen ihrer jeweiligen vorbestimmten Temperaturniveaus zu betreiben.

10. Analysestation (16) gemäss irgendeinem der Ansprüche 1 bis 9, zudem umfassend einen Positionssensor, welcher zum Messen einer Winkelposition des drehbaren Trägers (1) angepasst ist.

11. Analysestation (16) gemäss irgendeinem der Ansprüche 1 bis 10, worin der drehbare Träger (1) zudem ein Identifikationsmittel umfasst, welches codierte Information enthält, und eine Leseeinrichtung, welche zum Lesen der im Identifikationsmittel enthaltenen Information angepasst ist.

12. Verfahren zur Durchführung eines Agglutinationstests unter Verwendung einer Analysestation (16) gemäss irgendeinem der Ansprüche 1 bis 11, mit den folgenden Schritten:
Bereitstellen des drehbaren Trägers (1), welcher fest an der Antriebswelle (17) gehalten wird, worin die Reaktionsgefässe (3) des besagten Satzes von Reaktionsgefässen (3) eine Trennmatrix in ihrer unteren Kammer (10) enthalten;
Pipettieren von Reagenzmitteln und Proben in die obere Kammer (9) von mindestens einem Reaktionsgefäss (3) des Satzes von Reaktionsgefässen (3);
Inkubieren der Reagenzmittel und der Probe bei vorbestimmten Inkubationstemperaturen durch Erhitzen von mindestens einem Heizelement (51, 52, 53); und
Schleudern des drehbaren Trägers (1) mit einer vorbestimmten Schleudergeschwindigkeit, um die inkubierten Reagenzmittel und Proben von der oberen Kammer (9) in die untere Kammer (10) zu zwingen;
wobei das Verfahren vor dem besagten Inkubieren zudem das winkelmässige Positionieren der besagten Untergruppen von Reaktionsgefässen (3) in Bezug auf die Heizelemente (51, 52, 53) umfasst; und
wobei das besagt Inkubieren das selektive Inkubieren der Reagenzmitteln und Proben in der oberen Kammer (9) durch Erhitzen der Untergruppen bei vorbestimmten Inkubationstemperaturen gemäss der besagten Positionierung umfasst.

13. Verfahren gemäss Anspruch 12, worin das besagte Pipettieren durch Pipettieren verschiedener Reagenzmitteln und Proben in verschiedene ausgewählte Untergruppen von Reaktionsgefässen (3) gemäss der besagten Positionierung durchgeführt wird.

14. Verfahren gemäss den Ansprüchen 12 oder 13, worin das besagte Inkubieren bei vorbestimmten Inkubationstemperaturen zwischen der Raumtemperatur und 37°C durchgeführt wird.

15. Verfahren gemäss irgendeinem der Ansprüche 12 bis 14, worin unterschiedliche ausgewählte Untergruppen von Reaktionsgefässen (3) bei verschiedenen vorbestimmten Inkubationstemperaturen entsprechend der besagten Positionierung inkubiert werden.

16. Verfahren gemäss einem der Ansprüche 12 bis 15, worin der drehbare Träger (1) zudem ein Identifizierungsmittel umfasst, welches codierte Information enthält, und worin das besagte Positionieren und/oder das besagte Inkubieren in Übereinstimmung mit im Identifizierungsmittel enthaltenen codierten Informationen durchgeführt wird.

17. Computerträger mit Programmcodeteilen, welche von einer Steuereinheit auszuführen sind, um das Verfahren gemäss irgendeinem der Ansprüche 12 bis 16 auszuführen, wenn das besagte Programm von der Steuereinheit ausgeführt wird.

## Revendications

1. Station d'analyse (16) pour effectuer des analyses d'agglutination, comprenant:
un support rotatif (1) concentrique avec un axe de rotation (A) et adapté pour maintenir de manière pivotante un ensemble de cuves de réaction (3), chaque cuve de réaction (3) dudit ensemble de cuves de réaction (3) comprenant une chambre supérieure (9), configurée pour recevoir des réactifs fluides et/ou échantillons, et une chambre inférieure (10) ;
un arbre d'entraînement (17) agencé pour maintenir en entraînement ledit support rotatif (1) de manière coaxiale et le faire tourner à une vitesse de rotation prédéterminée, de telle sorte que les réactifs et/ou les échantillons puissent circuler depuis la chambre supérieure (9) vers la chambre inférieure (10) lorsque le support rotatif (1) est mis en rotation à une vitesse de rotation de centrifugation ; et
un dispositif de chauffage stationnaire (50) pour chauffer l'ensemble de cuves de réaction (3);
ledit dispositif de chauffage (50) comprenant une pluralité d'éléments chauffants (51, 52, 53) séparés thermiquement les uns des autres et dont la température est contrôlée séparément, les éléments chauffants (51, 52, 53) étant agencés de manière à chauffer de manière sélective des sous-ensembles dudit ensemble de cuves de réaction (3) à des températures d'incubation prédéterminées, lorsque le support rotatif (1) est maintenu sur l'arbre d'entraînement (17) ;
le dispositif de chauffage (50) étant agencé concentriquement avec l'axe de rotation (A) et ayant un diamètre externe suffisamment petit pour permettre aux cuves de réaction (3) de pivoter lorsque le support rotatif (1) est mis en rotation ; et
ledit dispositif de chauffage (50) étant à une altitude correspondant à ladite chambre supérieure (9).

2. Station d'analyse (16) selon la revendication 1, dans laquelle lesdits éléments chauffants (51, 52, 53) comprennent un premier élément chauffant (51) adapté pour chauffer de manière sélective un sous-ensemble comprenant jusqu'à une cuve de réaction (3), un deuxième élément chauffant (52) adapté pour chauffer un sous-ensemble comprenant jusqu'à deux cuves de réaction (3), et un ou plusieurs d'un troisième élément chauffant (53) adapté pour chauffer un ou plusieurs sous-ensembles comprenant jusqu'à trois cuves de réaction (3).

3. Station d'analyse (16) selon la revendication 2, dans laquelle lesdits éléments chauffants (51, 52, 53) comprennent cinq desdits troisièmes éléments chauffants (53).

4. Station d'analyse (16) selon l'une quelconque des revendications 1 à 3, dans laquelle le dispositif de chauffage (50) est concentrique avec le support rotatif (1).

5. Station d'analyse (16) selon l'une quelconque des revendications 1 à 4, dans laquelle lesdits éléments chauffants (51, 52, 53) sont séparés thermiquement l'un de l'autre par un séparateur isolant (55).

6. Station d'analyse (16) selon la revendication 5, dans laquelle le séparateur isolant (55) est un espace d'air.

7. Station d'analyse (16) selon l'une quelconque des revendications 1 à 6, dans laquelle le premier élément chauffant (51) s'étend le long d'une longueur d'arc en interceptant un angle d'environ 20°, le deuxième élément chauffant (52) s'étend le long d'une longueur d'arc en interceptant un angle d'environ 40°, et chacun desdits un ou plusieurs troisièmes éléments chauffants (53) s'étend le long d'une longueur d'arc en interceptant un angle d'environ 60°.

8. Station d'analyse (16) selon l'une quelconque des revendications 1 à 7, dans laquelle le support rotatif (1) comprend au moins une référence de position adaptée pour aligner ledit ensemble de cuves de réaction (3) par rapport auxdits éléments chauffants (51, 52, 53).

9. Station d'analyse (16) selon l'une quelconque des revendications 1 à 8, comprenant en outre une unité de commande adaptée pour faire fonctionner l'arbre d'entraînement (17) pour positionner le support rotatif (1) et/ou pour faire fonctionner lesdits éléments chauffants (51, 52, 53) pour régler leurs niveaux de température prédéterminés respectifs.

10. Station d'analyse (16) selon l'une quelconque des revendications 1 à 9, comprenant en outre un capteur de position adapté pour mesurer une position angulaire du support rotatif (1).

11. Station d'analyse (16) selon l'une quelconque des revendications 1 à 10, dans laquelle le support rotatif (1) comprend en outre un moyen d'identification contenant des informations codées, et un lecteur adapté pour lire les informations contenues dans les moyens d'identification.

12. Procédé de réalisation d'un test d'agglutination utilisant le poste d'analyse (16) selon l'une quelconque des revendications 1 à 11, comprenant
de fournir le support rotatif (1) maintenu fixement sur l'arbre d'entraînement (17), les cuves de réaction (3) dudit ensemble de cuves de réaction (3) contenant une matrice de séparation à l'intérieur de leur chambre inférieure (10);
de pipeter les réactifs et l'échantillon dans la chambre supérieure (9) d'au moins une cuve de réaction (3) de l'ensemble des cuves de réaction (3);
d'incuber les réactifs et l'échantillon à des températures d'incubation prédéterminées en chauffant au moins un élément chauffant (51, 52, 53); et
de centrifuger le support rotatif (1) à une vitesse de centrifugation prédéterminée pour forcer les réactifs incubés et l'échantillon à passer de la chambre supérieure (9) à la chambre inférieure (10);
avant ladite incubation, le procédé comprend en outre le positionnement angulaire desdits sous-ensembles de cuves de réaction (3) par rapport aux éléments chauffants (51, 52, 53); et
ladite incubation comprend l'incubation sélective des réactifs et des échantillons dans la chambre supérieure (9) en chauffant les sous-ensembles à des températures d'incubation prédéterminées en fonction dudit positionnement.

13. Procédé selon la revendication 12, dans lequel ledit pipetage est réalisé en pipetant différents réactifs et échantillons dans différents sous-ensembles sélectionnés de cuves de réaction (3) en fonction dudit positionnement.

14. Procédé selon les revendications 12 ou 13, dans lequel ladite incubation est effectuée à des températures d'incubation prédéterminées comprises entre la température ambiante et 37°C.

15. Procédé selon l'une quelconque des revendications 12 à 14, dans lequel différents sous-ensembles sélectionnés de cuves de réaction (3) sont incubés à différentes températures d'incubation prédéterminées en fonction dudit positionnement.

16. Procédé selon l'une quelconque des revendications 12 à 15, dans lequel le support rotatif (1) comprend en outre un moyen d'identification contenant une information codée et dans lequel ledit positionnement et/ou ladite incubation sont réalisés conformément à une information codée comprise dans le moyen d'identification.

17. Support d'ordinateur comprenant des parties de code de programme à exécuter par une unité de commande afin de mettre en oeuvre le procédé selon l'une quelconque des revendications 12 à 16, lorsque ledit programme est exécuté par ladite unité de commande.
